# EUROPEAN PATENT APPLICATION

(11) **EP 1 081 980 A1**
(43) Date of publication of application: **07.03.2001**
(21) Application number: 99117522.5
(22) Date of filing: 04.09.1999
(51) Int. Cl.: H04Q 7/38, H04B 1/707, H04B 7/26

(54) **Mobile station and method for monitoring of neighboring cells during reception of code division multiple access (CDMA) paging in a cellular mobile communications network**

(71) Applicant: SIEMENS AKTIENGESELLSCHAFT, 80333 München (DE)
(72) Inventor: Jepsen, Bent, 9700 Bronderslev (DK)

(57) **Abstract**

A mobile station and method for monitoring of neighboring cells during reception of Code Division Multiple Access (CDMA) paging in a cellular mobile communications system. During the reception of the paging information in a serving cell of a CDMA system, at least a subset of the rake fingers in the rake receiver of the mobile station which are not used for the reception of the paging information is used for monitoring of neighboring cells. During at least a portion of the paging reception period when paging information is not being received, at least a portion of the receiver system is used for the monitoring of neighboring cells.

## Description

### Background

The present invention relates to mobile communication systems in general, and, more specifically, to a mobile station and method for monitoring of neighboring cells during reception of Code Division Multiple Access (CDMA) system paging in a cellular mobile communications system.

A mobile station, or terminal, of a mobile communications network in the idle mode must be able to receive incoming calls and be ready to support outgoing calls while moving between network cells. These goals are achieved by means of the following activities:
1. Reception of paging information
2. Monitoring of neighboring cells

Both reception of paging information and monitoring of neighboring cells require the mobile station to be powered-up to a standby state. When the mobile station has nothing to do it enters a powered-down state to conserve battery power and extend the standby time.

Reception of paging information typically requires the mobile station to power-up and remain in a standby state while it receives a series of designated paging parts contained in paging blocks, or portions of blocks. Among other things, the paging information notifies the mobile unit of any incoming calls. There may typically be time periods, or slots, between reception of relevant paging information parts when the mobile station is not receiving paging information. During these intervening time slots, the mobile station must remain in a powered-up state because there is typically insufficient time for the mobile station to power down and power back up again in time to receive the next relevant paging information part. A typical mobile station may require, for example, 5 ms to power up and stabilize its radio receiver.

Monitoring of neighboring cells is performed to effect mobility between cells of the network. A mobile station in the idle state needs to maintain the best possible conditions for call set-up. Toward this end, the mobile station collects information about surrounding, or neighboring, cells contained in network broadcast information. Based on this information, the mobile station regularly measures quantities which characterize the reception quality of the neighboring cells. This measurement activity is known as neighboring cell monitoring. When a neighboring cell is found more suitable than the serving cell the mobile station performs cell reselection. These measure quantities may include: downlink received signal power, downlink signal-to-interference ratio, and downlink path loss.

As noted above, performing neighboring cell monitoring requires the mobile station to be powered-up. Mobile communications system specifications may not set forth how these idle mode neighboring cell measurements can be performed in an efficient way with respect to power consumption.

### Advantages of the Invention

The present invention provides a mobile station for a cellular mobile communications network, the mobile station including a rake receiver having a plurality of rake fingers, the mobile station operating in a Code Division Multiple Access system in a frequency band and receiving paging information during a portion of a paging reception period, characterized in that during the reception of the paging information, at least a subset of the rake fingers not used for the reception of the paging information are used for monitoring of neighboring cells.

The present invention also provides a mobile station for a cellular mobile communications network, the mobile station including a receiver system, the receiver system including a rake receiver having a plurality of rake fingers, the mobile station operating in a Code Division Multiple Access system in a frequency band and receiving paging information during a portion of a paging reception period, characterized in that during at least a portion of the paging reception period when paging information is not being received, at least a portion of the receiver system is used for monitoring of neighboring cells.

The present invention also provides an article comprising a storage medium, the storage medium having a set of instructions, the set of instructions being capable of being executed by at least one processor to implement a method for monitoring of neighboring cells by a mobile station of a cellular a mobile communications network, the mobile station including a rake receiver having a plurality of rake fingers, the mobile station operating in a Code Division Multiple Access system in a frequency band and receiving paging information during a portion of a paging reception period, characterized in that during the reception of the paging information, at least a subset of rake fingers not used for the reception of the paging information are used for monitoring of neighboring cells.

The present invention also provides a method for monitoring of neighboring cells by a mobile station of a cellular mobile communications network, the mobile station including a rake receiver having a plurality of rake fingers, the mobile station operating in a Code Division Multiple Access system in a frequency band and receiving paging information during a paging reception period, characterized in that during the reception of the paging information at least a subset of rake fingers not used for the reception of the paging information are used for monitoring of neighboring cells.

In one embodiment of the present invention, neighboring cells in a frequency band different than that of the serving cell are monitoring during at least a portion of the regular reception of paging when paging information is not being received.

In another embodiment of the present invention, neighboring cells belonging to a system different than that of the serving cell are monitored during regular reception of paging between reception of relevant paging parts. For this embodiment, the mobile station must be a multi-mode terminal.

According to the present invention, neighboring cell monitoring may be performed in one power-up and power-down cycle while the mobile station is engaged in a periodic paging reception cycle. Monitoring neighboring cells during paging block reception reduces the total power-up time and thereby increases the maximum standby time of the mobile station.

Further advantages of the present invention will become apparent from the claims and the description below, based on the drawings, in which:

### Drawings

Fig. 1 is a schematic diagram showing the arrangement of paging blocks in time slots in a UMTS paging channel;
Fig. 2 is a schematic diagram of a mobile station according to the present invention and showing portions of three network cells:
Fig. 3 is a schematic diagram showing rake receiver behavior for a sequence of UMTS paging channel time slots in accordance with an embodiment of the invention for monitoring neighboring cells in the same band as the serving cell when the PI parts indicate no relevant information in MUI parts;
Fig. 4 is a schematic diagram showing rake receiver behavior for a sequence of UMTS paging channel time slots in accordance with the embodiment of the invention depicted in Fig. 3 when the PI parts indicate there is relevant information in MUI parts;
Fig. 5 is a schematic diagram showing rake receiver behavior for a sequence of UMTS paging channel time slots in accordance with an embodiment of the invention for monitoring neighboring cells in a different band from the serving cell when the PI parts indicate no relevant information in MUI parts;
Fig. 6 is a schematic diagram showing rake receiver behavior for a sequence of UMTS paging channel time slots in accordance with the embodiment of the invention depicted in Fig. 5 when the PI parts indicate there is relevant information in MUI parts;
Fig. 7 is a schematic diagram showing rake receiver behavior for a sequence of UMTS paging channel time slots in accordance with an embodiment of the invention for monitoring neighboring cells in a different system from the serving cell when the PI parts indicate no relevant information in MUI parts; and
Fig. 8 is a schematic diagram showing rake receiver behavior for a sequence of UMTS paging channel time slots in accordance with the embodiment of the invention depicted in Fig. 7 when the PI parts indicate there is relevant information in MUI parts.

### Description

The present invention will now be described with particular reference to exemplary embodiments in the context of a Universal Mobile Telephone System/Frequency Division Duplex (UMTS/FDD) mobile terminal operating in a Third Generation Partnership Project (3GPP) mobile communications system.

A UMTS/FDD mobile terminal receives, decodes, codes and sends messages in a Code Division Multiple Access (CDMA) environment. As is known, reception in a UMTS mobile terminal is performed using a rake receiver having multiple fingers which may be allocated in groups to receive disparate signals simultaneously. See Glisic, Savo and Branka Vucetic, Spread Spectrum CDMA Systems for Wireless Communications, Artech House Publishers, 1997.

Reception of paging information may be performed as follows:

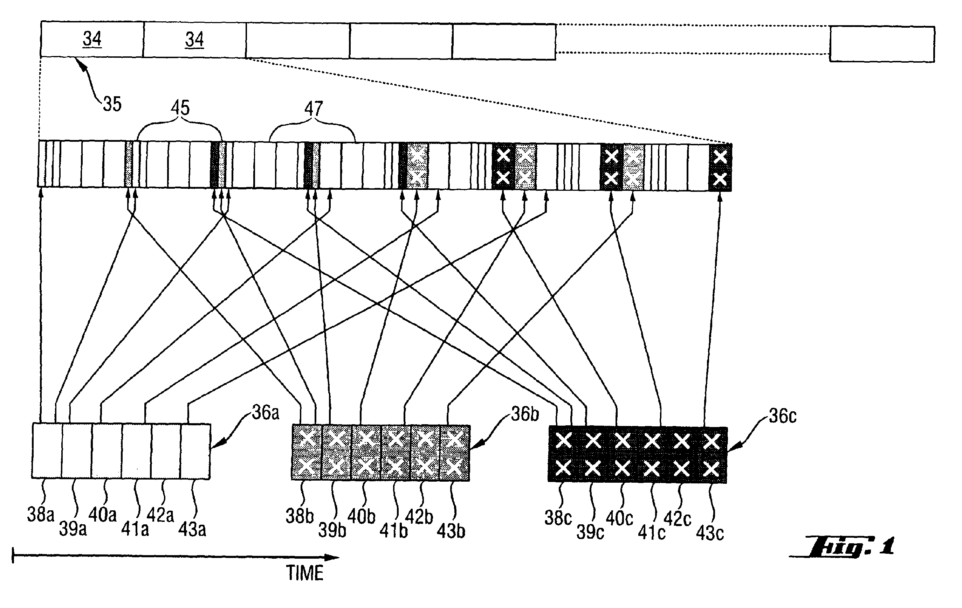

Referring to Fig. 1, in idle mode a UMTS mobile station powers-up and listens periodically to designated paging block [36a-c] repeated in PCH frames [34] on the PCH (paging channel) transmitted on the Secondary CCPCH (Common Control Physical Channel) [35]. Each paging block carries six information parts: two Paging Indication (PI) parts [38a-c] and [39a-c], respectively, for indicating whether any paging messages for that mobile station are present, and four Mobile User Identifier (MUI) parts, [40a-c], [41a-c], [42a-c] and [43a-c], respectively, for indicating the subscriber identity and carrying the actual paging message. The paging blocks are mapped to Secondary CCCPCH [35] so that the PI parts [38a-c] and [39a-c] and MUI parts [40a-c], [41a-c], [42a-c] and [43a-c] are distributed into disparate time slots or time slot portions [45] in PCH frames [34], as shown in Fig. 1. This distribution of PI and MUI parts in time results in interleaved time slots or time slot portions [47] with information of no relevance to the particular mobile station, such as paging blocks designated for other mobile stations, empty time slots, etc. See 3GPP Radio Access Network (RAN), S1.11 Transport channel and physical channels, version 0.0.0 (1999-02).

In each block, the PI parts are transmitted ahead of the MUI parts. Upon receiving a portion of a paging block, the mobile station first examines the PI parts. If the PI parts indicate that the MUI parts carry paging information, the mobile station is required to receive and examine one or more of the 4 MUI parts. Otherwise, the mobile station may skip the MUI parts. Once the mobile station has completed each periodic listening cycle, or paging reception period, it typically powers-down.

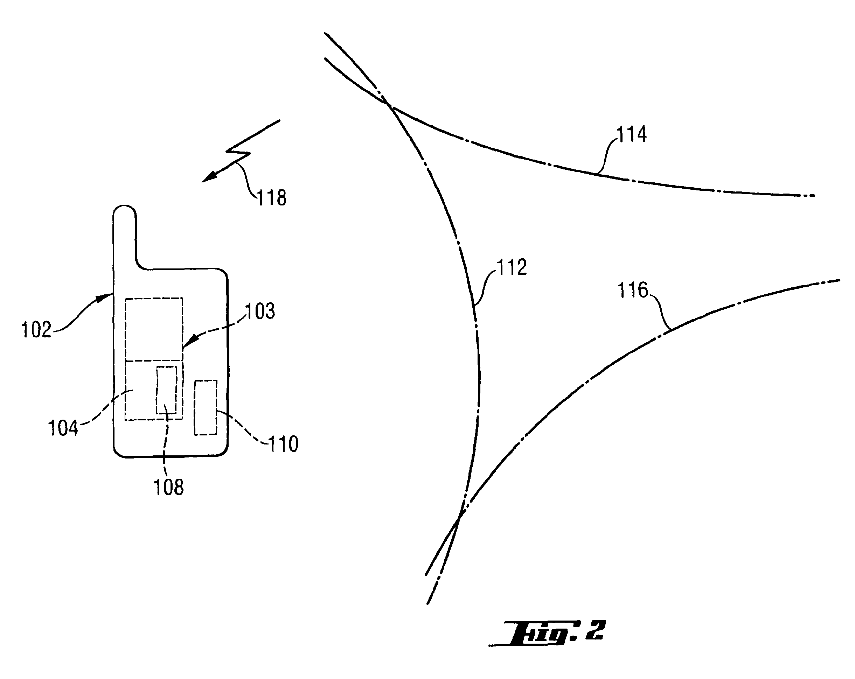

Referring to Fig. 2, UMTS mobile station [102] includes processor [110] and rake receiver [104] having a plurality of rake fingers [108]. Rake receiver [104] is a part of receiver system [103]. Where mobile station [102] is a multi-mode terminal having a receiver system capable of tuning between signals of two different systems, receiver system [103] may include one or more other receivers or receiver subsystems (not shown). Mobile station [102] may be a multi-mode mobile station, capable of operating, for example in a Global System for Mobile Telecommunications (GSM) system as well as a UMTS system. Mobile station [102] operates in serving cell [112] and powers up to receives paging information 118 in the cell during a paging reception period. Paging information [118] is paging information designated for the mobile station, the information being spread out in time in a discontinuous fashion, as described above. Adjacent to cell [112] are neighboring cells [114] and [116]. During the reception of paging information [118], a subset of rake fingers [108] not being used for the reception of the paging information may be used for monitoring of neighboring cell [114] and/or neighboring cell [116], and/or any additional neighboring cells. Also, during times in a paging reception period between reception of paging information, while the rake receiver remains in a powered-up state but not receiving paging information, all or a subset of all rake fingers may be used for monitoring of the neighboring cells. After receiving all relevant paging information needed, the mobile station powers down.

Three exemplary variants, or embodiments, of the present invention are described below:

### Variant 1:

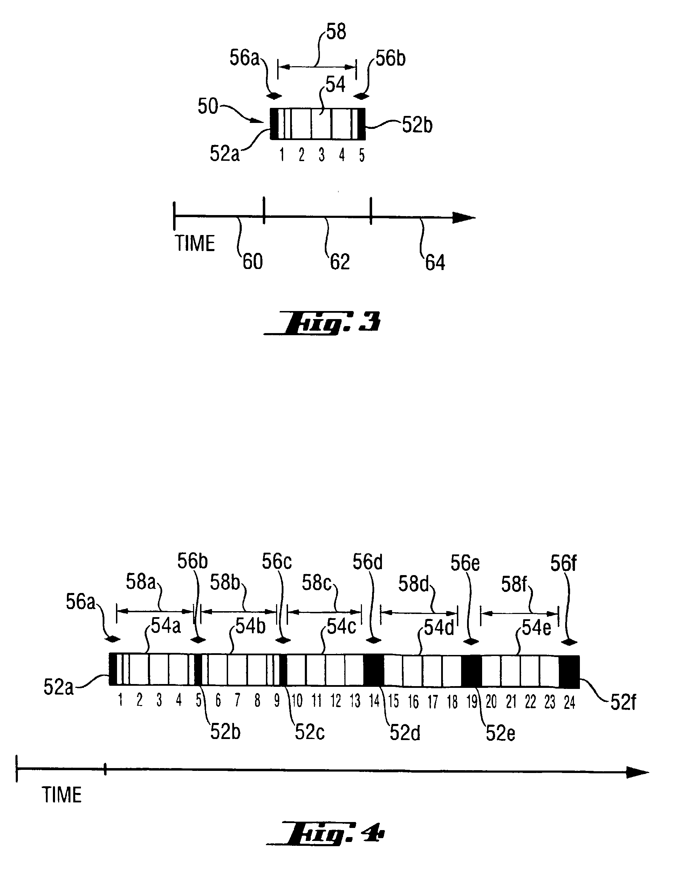

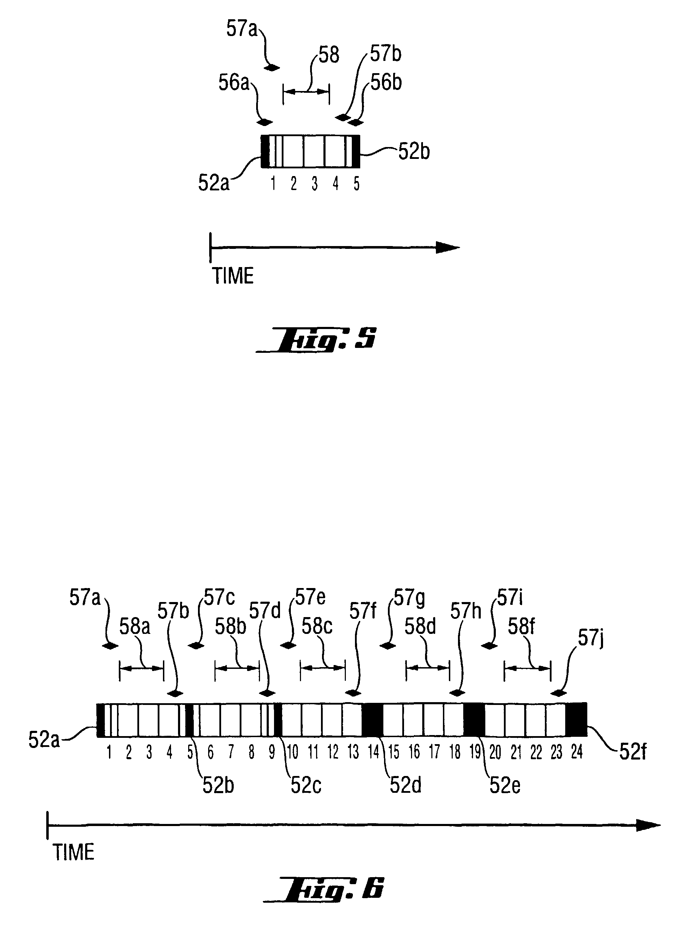

Referring additionally to Figs. 3 and 4, mobile station [102] may monitor UMTS/FDD carriers in same band as serving cell [112] during a paging reception period, both during reception of paging information [118] and in time slots or time slot portions between reception of paging information. Fig. 3 depicts the situation in which the PI parts of paging information [118] indicate no relevant information for mobile station [102] in the MUI parts of the paging block. UMTS frame [50] has time slots [1]-[5], with paging information [52a] and [52b] being received in portions of time slots [1] and [5], respectively, and no designated paging information being received in time slots [2]-[4] and remaining portions of time slots [1] and [5]. During time periods [56a] and [56b], corresponding to portions of time slots [1] and [5], respectively, rake receiver [104] receives paging information [52a] and [52b]. During time periods [56a] and [56b], all available rake fingers [108] not being used to receive the paging information are preferably allocated to monitor neighboring cells [114] and [116] by measuring signals from these cells in the same frequency band as serving cell [112]. During time period [58], corresponding to time slots [2]-[4] and portions of time slots [1] and [5], all rake fingers [108] are used to monitor the neighboring cells. Alternatively, during one, some, or all of time periods [56a], [56b] and [58], a subset of available rake fingers are used to monitor neighboring cells. By "available" rake fingers is herein meant rake fingers not allocated to other receiver functions. Generally, the speed of the monitoring process is a function of the number of rake fingers allocated to monitoring. Mobile station [102] powers up during time period [60], before time slot [1], remains in a powered-up state during time period [62], for time slots [1]-[5], then powers down during time period [64] since paging information [52a] and [52b] has indicated that there is no relevant information for the mobile station.

Fig. 4 depicts the situation in which the PI parts of paging information [118] indicate that there is relevant information for mobile station [102] in the MUI parts of the paging block. The element numbering mirrors that of Fig. 3. In this case, the mobile station remains in a powered-up state from time slot [1] through time slot [24] so that it can receive paging information [52a-f], in time slots [1], [5], [9], [14]. [19] and [24]. The mobile station must remain in a powered-up state because, as embodied herein, and as is typical, the mobile station is not capable of powering down and up in the relatively short time span (less than .625 msec in a UMTS system) between each set of time slots [1] and [5], [5] and [9], [9] and [14], [14] and [19], and [19] and [24]. During time periods [56a-f], corresponding to respective portions of time slots [1], [5], [9], [14], [19] and [24], rake receiver [104] receives paging information [52a-f]. Similar to the situation described with reference to Fig. 3, during time periods [56a-f] at least a subset of available rake fingers [108] not being used to receive the paging information is allocated to monitor neighboring cells [114] and [116] by measuring signals from these cells in the same frequency band as serving cell [112]. During time periods [58a-f], corresponding to the portions of time slots [1]-[24] outside of time periods [56a-f], at least a subset of available rake fingers [108] are preferably used to monitor the neighboring cells. Preferably, all available rake fingers [108] are used to monitor neighboring cells time periods [58a-f]. Mobile station [102] powers up before time slot [1], remains in a powered-up state for time slots [1]-[24], then powers down after having received all relevant paging information needed.

### Variant 2:

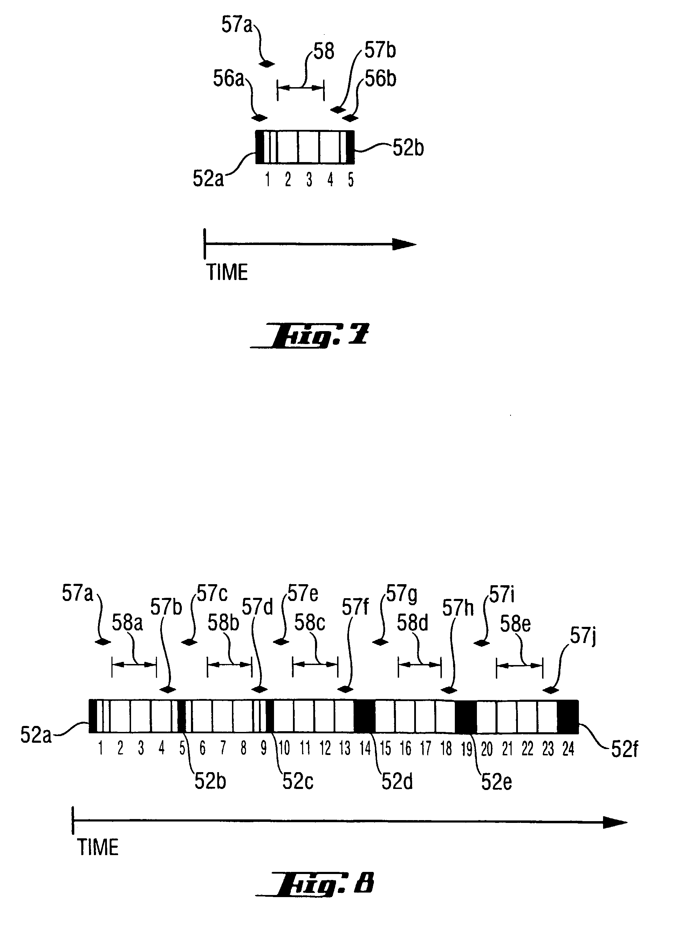

Referring additionally to Figs. 5 and 6, mobile station [102] may monitor UMTS/FDD carriers in a frequency band different from that of serving cell [112] during a paging reception period in time slots or time slot portions between reception of paging information. Fig. 4 depicts the situation in which the PI parts of paging information [118] indicate no relevant information for mobile station [102] in the MUI parts of the paging block. As described above with reference to Variant 1, during the time periods [56a] and [56b], corresponding to portions of time slots [1] and [5], rake receiver [104] receives paging information [52a] and [52b]. No designated paging information is received in time slots [2]-[4] and remaining portions of time slots [1] and [5]. Here, rake receiver [104] requires time period [57a] to tune to the different frequency band of cell [114] and/or [116], and time period [57b] to tune back to the frequency band of serving cell [112]. Time periods [57a] and [57b] may be approximately .5 msec, for example. As embodied herein, after rake receiver [104] has received paging information [52]a during time period [56a], it is tuned during time period [57a] to the different frequency band of cell [114] and/or [116]. As in Variant 1 above, at least a subset of the available rake receiver fingers are then used to monitor cell [114] and/or [116] in the frequency band of these cells during time period [58]. Where cells [114] and 116 operate in two different frequency bands, in some embodiments of the present invention rake receiver [104] could, for example, be tuned to monitor cell [114] for a portion of time period [58] and then be tuned to monitor cell [116] during another portion of time period [58]. Other variations are also possible. During time period [57b], rake receiver [104] is tuned back to the frequency of serving cell [112], so that at time period [56b] it will be ready to receive paging information [52b]. As described in Variant 1, mobile station [102] powers up before time slot [1], remains in a powered-up state for time slots [1]-[5], then powers down since paging information [52a] and [52b] has indicated that there is no relevant information for the mobile station.

Fig. 6, analogous to Fig. 4 for Variant 1, depicts the situation in which the PI parts of paging information [118] indicate that there is relevant information for mobile station [102] in the MUI parts of the paging block. As with Variant 1, the mobile station remains in a powered-up state from time slot 1 through time slot [24] so that it can receive paging information [52a-f], in time slots [1], [5], [9], [14], [19] and [24]. During time periods [56a-f], corresponding to respective portions of time slots [1], [5], [9], [14], [19] and [24], rake receiver [104] receives paging information [52a-f]. Analogous to the situation described with reference to Fig. 5, during time periods [57a-j], as embodied herein, rake receiver tunes periodically between the frequencies of neighboring cells [114] and/or [116] and serving cell [112]. In this way the rake receiver may be used to monitor the neighboring cells during time periods [58a-f], while periodically receiving paging information [52a-f] in the appropriate time slots. As in Variant 1, mobile station [102] powers up before time slot [1], remains in a powered-up state for time slots [1]-[24], then powers down after having received all relevant paging information needed.

### Variant 3:

Referring additionally to Figs. 6 and 7, analogous to Figs. 4 and 5, mobile station [102] may monitor carriers in a system different from the UMTS system of serving cell [112] during a paging reception period in time slots or time slot portions between reception of paging information [118]. The other, different system may be an IS-95 CDMA system or a GSM system, for example. In this variant, mobile station [102] is a multi-mode terminal having a receiver system capable of tuning between and receiving signals of the two different systems. For example, where the other system is a GSM system, receiver system [103] may include two receiver chains, or subsystems, one having a rake receiver for receiving UMTS/FDD carriers and the other having a GSM receiver for receiving GSM carriers. Some receiver system components may be shared between the two receiver chains. Fig. 7 depicts the situation in which the PI parts of paging information [118] indicate no relevant information for mobile station [102] in the MUI parts of the paging block. As described above with reference to Variant 2, during the time periods [56a] and [56b], corresponding to portions of time slots [1] and [5], rake receiver [104] receives paging information [52a] and [52b]. No designated paging information is received in time slots [2]-[4] and remaining portions of time slots [1] and [5]. Here, receiver system [103] requires time period [57a] to tune to the different system of cell [114] and/or [116], and time period [57b] to tune back to the system of serving cell [112]. Time periods [57a] and [57b] may be approximately .5 msec, for example. As embodied herein, after rake receiver [104] has received paging information [52a] during time period [56a], the receiver system is tuned during time period [57a] to the different system of cell [114] and/or [116]. The receiver subsystem provided for operating in the other system is then used to monitor cell [114] and/or [116] during time period [58]. During time period [57b], receiver system [103] is tuned back to the UMTS system of serving cell [112], so that at time period [56b] it will be ready to receive paging information [52b]. As described in Variant 1, mobile station [102] powers up before time slot [1], remains in a powered-up state for time slots [1]-[5], then powers down since paging information [52a] and [52b] has indicated that there is no relevant information for the mobile station.

Fig. 8, analogous to Fig. 6 for Variant 2, depicts the situation in which the PI parts of paging information [118] indicate that there is relevant information for mobile station [102] in the MUI parts of the paging block. As with Variant 2, the mobile station remains in a powered-up state from time slot [1] ] through time slot [24] so that it can receive paging information [52a-f], in time slots [1], [5], [9], [14], [19] and [24]. During time periods [56a-f], corresponding to respective portions of time slots [1], [5], [9], [14], [19] and [24], rake receiver [104] receives paging information [52a-f]. Analogous to the situation described with reference to Fig. 7, during time periods [57a-j], as embodied herein, receiver system [103] tunes periodically between the systems of neighboring cells [114] and/or [116] and serving cell [112]. In this way the receiver system may be used to monitor the neighboring cells during time periods [58a-f], while periodically receiving paging information [52a-f] in the appropriate time slots. As in Variant 2, mobile station [102] powers up before time slot [1], remains in a powered-up state for time slots [1]-[24], then powers down after having received all relevant paging information needed.

In all the variants described herein, as well as other embodiments of the present invention, monitoring of neighboring cells may include measuring downlink received signal power, downlink signal-to-interference ration, or downlink path loss, or receiving other useful information.

It should be noted that, under UMTS specifications, the mobile station need receive only as many of the MUI parts as is necessary to capture the information intended for it. In all three variants described above, when sufficient MUI parts have been received, the mobile station powers down.

In some networks, neighboring cells may include a mixture of cells having different frequency bands and systems, both with respect to each other and with respect to the serving cell. The mobile station may receive network broadcast information concerning these cells and then engage in monitoring of this mixture of neighboring cells. In some embodiments of the invention, variants 1-3 described above may be combined and applied to monitoring in such mixed situations, both in a given paging reception period and among paging periods. For example, the receiver system may, in a given paging reception period, monitor a neighboring cell in a different frequency band during one set of time slots in which no paging information is being received, tune to receive paging information, receive the paging information, then tune to monitor neighboring cells in a different system during the next set of time slots in which no paging information is being received. Various combinations are possible.

Preferably, receiver system, e.g., rake receiver, control software in the mobile station is programmed to operate the receiver subsystem, e.g., to allocate the rake fingers, for performing the monitoring according to the present invention. Such programming modifications are preferably executed by processor [110] in mobile station [102] for executing radio resource management functions, or by another appropriate processor. See Fig. 2. As such programming modifications would be well-understood by one of skill the art, they are not further described herein. It should be noted that embodiments are also possible in which hardware changes replace the software changes.

Various embodiments within the scope of the present invention are possible. For example, the present invention may be applied to different frequency bands other than those described herein. Additionally, the present invention may be applied for monitoring in other types of mobile communication systems than those described herein. Also, embodiments described herein may be applied in a variety of combinations for monitoring neighboring cells in the same or different frequency bands as the serving cell, and in the same or different systems as the serving cell, by retuning the receiver system as appropriate at desired time slots during a paging reception period or periods. These and other variations are intended to be part of the present invention, the scope of which is intended to be limited only by the claims appended hereto.

## Claims

1. A mobile station for a cellular mobile communications network, the mobile station including a rake receiver having a plurality of rake fingers, the mobile station operating in a Code Division Multiple Access system in a frequency band and receiving paging information during a portion of a paging reception period, characterized in that during the reception of the paging information, at least a subset of the rake fingers not used for the reception of the paging information are used for monitoring of neighboring cells.

2. A mobile station for a cellular mobile communications network, the mobile station including a receiver system, the receiver system including a rake receiver having a plurality of rake fingers, the mobile station operating in a Code Division Multiple Access system in a frequency band and receiving paging information during a portion of a paging reception period, characterized in that during at least a portion of the paging reception period when paging information is not being received, at least a portion of the receiver system is used for monitoring of neighboring cells.

3. The mobile station of claim 2, characterized in that the at least a portion of the receiver system includes at least a subset of the rake fingers.

4. The mobile station according to one of claims 1 or 2, characterized in that the Code Division Multiple Access system is a Universal Mobile Telephone System.

5. The mobile station according to claim 1 characterized in that during the reception of the paging information all available rake fingers are used for the monitoring of neighboring cells.

6. The mobile station according to claim 2 characterized in that the at least a portion of the receiver system includes all available rake fingers.

7. The mobile station according to one of claims 1 or 2, characterized in that the monitoring of neighboring cells includes monitoring of signals in the same frequency band as the current operating frequency band of the mobile station.

8. The mobile station according to claim 2, characterized in that the monitoring of neighboring cells includes monitoring of signals in a frequency band different from the current operating frequency band of the mobile station.

9. The mobile station according to claim 2, characterized in that the mobile station is a multi-mode mobile station and in that monitoring of neighboring cells includes monitoring of signals in another system different from the Code Division Multiple Access system in which the mobile station is currently operating.

10. The mobile station according to claim 9, characterized in that the Code Division Multiple Access system is a UMTS system and the other system is a GSM system.

11. The mobile station according to one claims 1 or 2, characterized in that the monitoring of neighboring cells includes measuring downlink received signal power, downlink signal-to-interference ratio, or downlink path loss.

12. The mobile station according to one of claims 1 and 2, characterized in that a processor is used for controlling the monitoring.

13. An article comprising a storage medium, the storage medium having a set of instructions, the set of instructions being capable of being executed by at least one processor to implement a method for monitoring of neighboring cells by a mobile station of a cellular mobile communications network, the mobile station including a rake receiver having a plurality of rake fingers, the mobile station operating in a Code Division Multiple Access system in a frequency band and receiving paging information during a portion of a paging reception period, characterized in that during the reception of the paging information, at least a subset of the rake fingers not used for the reception of the paging information are used for monitoring of neighboring cells.

14. The article according to claim 13, characterized in that during a portion of the paging reception period when paging information is not being received, at least a subset of the rake fingers are used to monitor neighboring cells.

15. The article according to claim 13, characterized in that the monitoring of neighboring cells includes measuring downlink received signal power, downlink signal-to-interference ratio, or downlink path loss.

16. The article according to claim 13, characterized in that a processor is used for controlling the monitoring.

17. A method for monitoring of neighboring cells by a mobile station of a cellular mobile communications network, the mobile station including a rake receiver having a plurality of rake fingers, the mobile station operating in a Code Division Multiple Access system in a frequency band and receiving paging information during a paging reception period, characterized in that during the reception of the paging information, at least a subset of the rake fingers not used for the reception of the paging information are used for monitoring of neighboring cells.

18. The method according to claim 17, characterized in that during at least a portion of the paging reception period when paging information is not being received, at least a subset of the rake fingers are used for the monitoring of neighboring cells.

19. The method according to claim 17, characterized in that the Code Division Multiple Access system is a Universal Mobile Telephone System.

20. The method according to claim 17, characterized in that the monitoring of neighboring cells includes measuring downlink received signal power, downlink signal-to-interference ratio, or downlink path loss.
